# EUROPÄISCHE PATENTSCHRIFT

(11) **EP 1 763 983 B1**
(45) Veröffentlichungstag und Bekanntmachung des Hinweises auf die Patenterteilung: **24.10.2012**
(21) Anmeldenummer: 06018909.9
(22) Anmeldetag: 09.09.2006
(51) Int. Cl.: A01B 73/02, B60Q 1/26

(54) **Landwirtschaftliches Gerät**
Agricultural device
Dispositif d'agriculture

(30) Priorität: 15.09.2005 DE 102005044076
(43) Veröffentlichungstag der Anmeldung: 21.03.2007
(73) Patentinhaber: Amazonen-Werke H. Dreyer GmbH & Co. KG, 49205 Hasbergen (DE)
(72) Erfinder: Gieseke, Reinhard, 27798 Hude (DE); Reinke, Wilfried, 26123 Oldenburg (DE); Tiessen, Reimer Uwe, 26135 Oldenburg (DE); Pokriefke, Michael, 26135 Oldenburg (DE)

(56) Entgegenhaltungen:
- EP-A- 1 523 872
- DE-A1- 2 920 200
- DE-C1- 4 200 508
- US-A- 4 664 202
- US-A1- 2003 110 995

## Beschreibung

Die Erfindung betrifft ein gezogenes landwirtschaftliches Gerät gemäß des Oberbegriffes des Patentanspruches 1.

Ein solches Gerät ist aus US 466 4 202 Gekannt.

Wenn derartige landwirtschaftliche Geräte auf öffentlichen Straßen und Wegen bewegt werden, muss auf der Rückseite des Gerätes eine Beleuchtungseinrichtung angeordnet sein. Hierzu gibt es in der Praxis verschiedene Lösungen. Beispielsweise werden Beleuchtungseinrichtungen, wenn sich das Gerät in Transportstellung befindet, mit Hilfsmitteln auf der Rückseite des Gerätes angeordnet. Teilweise gibt es auch Lösungen, bei denen die Beleuchtungseinrichtung an den die Ausbring- und/oder Bodenbearbeitungsfahrzeuge tragenden Querbalken angeordnet sind.

Der Erfindung liegt die Aufgabe zugrunde eine vorteilhafte Anordnung der Beleuchtungseinrichtung an dem Rahmen der Maschine vorzuschlagen, wobei die Beleuchtungseinrichtung in Transportstellung des Gerätes sich in vorgeschriebener Weise auf der Rückseite der Geräteteile des Gerätes befinden und bei sich in Arbeitsstellung befindlichen Gerät die Leuchtenträger die Funktion der Maschine nicht behindern.

Diese Aufgabe wird erfindungsgemäß durch die kennzeichnenden Merkmale des Patentanspruches 1 gelöst. Infolge dieser Maßnahmen werden die Beleuchtungseinrichtungen durch herausschwenken der Leuchtenträger bei sich in Transportstellung befindlichen Teilen des Gerätes in die vorgeschriebene Position gebracht, während sie in Arbeitsstellung des Gerätes in eine geschützte Position eingezogen sind. Die Ein- und Ausschwenkung erfolgt automatisch bei der Verstellung der Geräteteile in Transportstellung oder in Arbeitsstellung.

Eine vorteilhafte Ausgestaltung der Leuchtenträger wird dadurch erreicht, dass zwischen dem Rahmen und einem der Gestängeteile eine die Leuchtenträger einschwenkende Zugfeder angeordnet ist.

Um die Leuchtenträger in einfacher Weise einschwenken zu können, ist vorgesehen, dass zwischen dem Rahmen und einem der Gestängeteile eine die Leuchtenträger einschwenkende Zugfeder angeordnet ist.

Ein einfaches Verschwenken der Gestängeteile der Leuchtenträger lässt sich dadurch erreichen, dass ein Gestängeteil mit der das Gelenk bildenden Welle drehfest verbunden ist, dass diese Welle nach oben verlängert ist, dass an dem verlängerten Wellenende ein Schwenkhebel angeordnet ist dass der Schwenkhebel mit einem Verbindungselement mit dem Mittelteil verbunden ist.

Ein automatisches Verschwenken der Leuchtenträger durch das hochklappbare Kuppelteil wird dadurch erreicht, dass der die Ausbring- und/oder Bodenbearbeitungswerkzeuge tragende Querbalken als einklappbares Auslegergestänge ausgebildet ist, welches aus ein am Rahmen angehängtes und um eine quer zur Fahrtrichtung laufende Schwenkachse hochklappbares Kuppelteil und an dem Kuppelteil jeweils seitlich angelenkte und um senkrechte Achsen, wenn das Kuppelteil mit den Auslegern um 90° aus der Arbeitsstellung in die Transportstellung geschwenkt ist, einklappbare Seitenausleger besteht.

Weitere Einzelheiten der Erfindung sind den übrigen Unteransprüchen, der Beispielsbeschreibung und den Zeichnungen zu entnehmen. Hierbei zeigen
- Fig. 1: das gezogene landwirtschaftliche Gerät in Transportstellung und in der Draufsicht,
- Fig. 2: das Gerät in Arbeitsstellung mit eingezogenen Leuchtenträgern in Draufsicht,
- Fig. 3: das Gerät in Arbeitsstellung mit nicht eingezogenen Leuchtenträgern in der Draufsicht,
- Fig. 4: Detailansicht des Gerätes in Arbeitsstellung mit nicht eingezogenen Leuchtenträgern,
- Fig. 5: die Anordnung der Leuchtenträger in herausgeschwenkter Stellung für die Transportstellung des Gerätes in der Draufsicht,
- Fig. 6: die eingeschwenkten Leuchtenträger für die Arbeitsstellung des Gerätes in der Draufsicht,
- Fig. 7: die eingeschwenkten Leuchtenträger bei Arbeitsstellung des Gerätes in Detailansicht und perspektivischer Darstellung,
- Fig. 8: die für die Arbeitsstellung des Gerätes eingezogenen Leuchtenträger in Teilansicht des Gerätes in perspektivischer Darstellung und

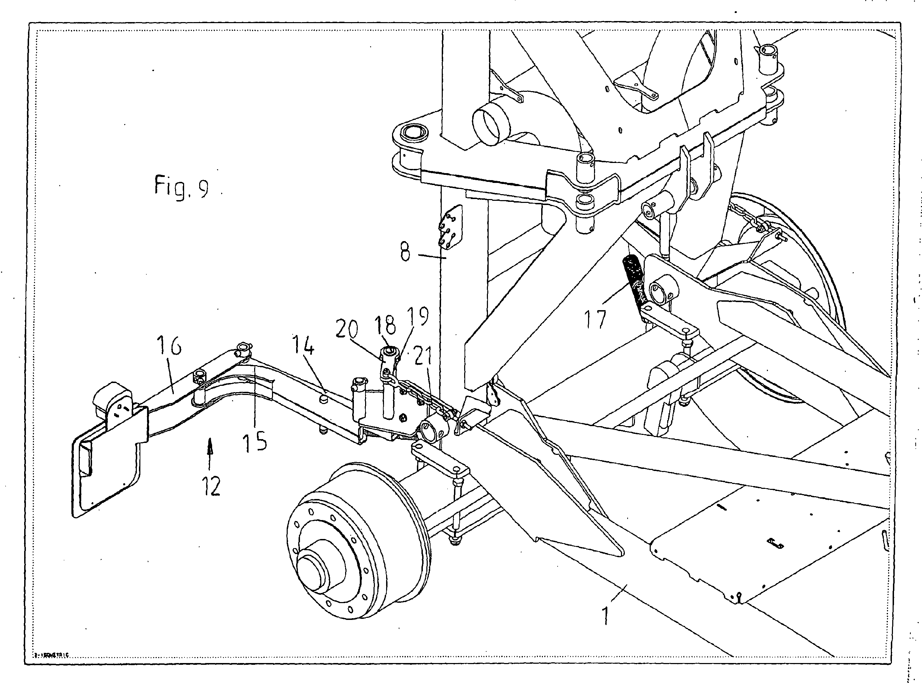

- Fig. 9: die für die Transportstellung mit herausgeschwenkten Leuchtenträgern in Transportstellung und des Gerätes in Teilansicht und perspektivischer Darstellung.

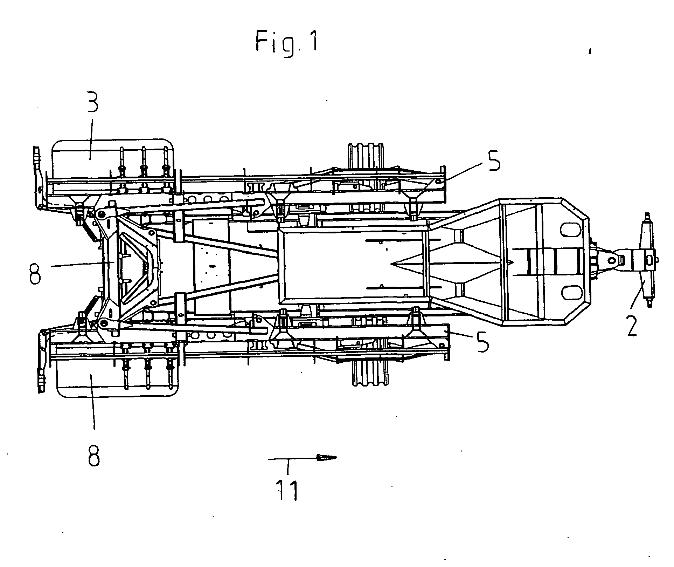

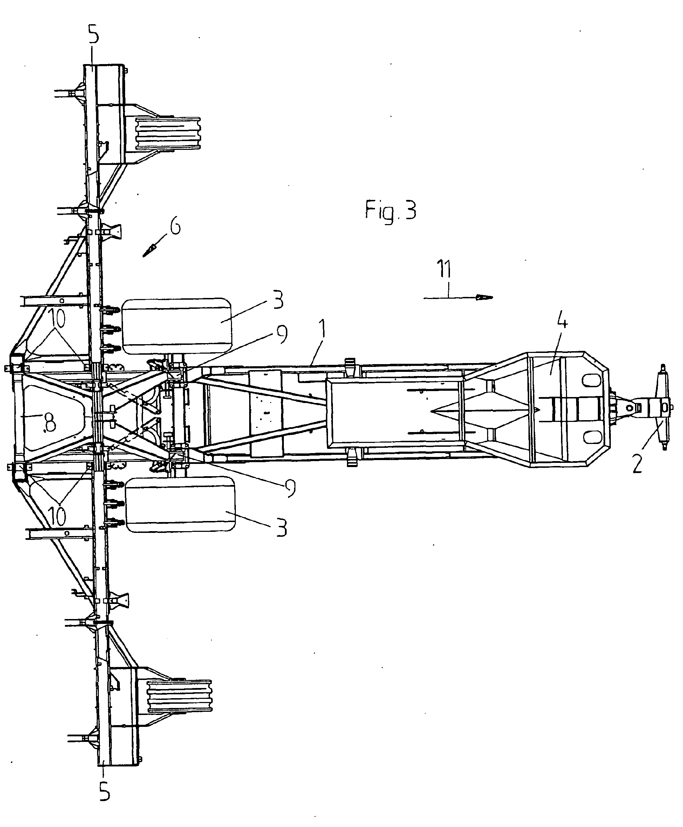

Das gezogene landwirtschaftliche Gerät ist als Sämaschine ausgebildet. Das Gerät weist den Rahmen auf. Auf der Vorderseite des Rahmens ist die Anhängevorrichtung angeordnet, während sich im rückwärtigen Bereich des Rahmens 1 das die Laufräder 3 aufweisende Fahrwerk befindet, auf welchem sich der Rahmen 1 abstützt. Im vorderen Bereich des Rahmens 1 ist der Vorratsbehälter 4 angeordnet, von dem aus über Förder- und Verteileinrichtungen den an dem als Querbalken 5 ausgebildeten Auslegergestänge 6 angeordneten, jedoch nicht dargestellten Säscharen das sich im Vorratsbehälter 4 befindliche Saatgut zugeführt wird. An dem Querbalken 5 sind die als Ausbring- und Bodenbearbeitungswerkzeuge ausgebildeten Säschare sowie hinter den Laufrädern 3 die von den Laufrädern 3 angedrückte Radspur auflockernden Radspurlockerer 7 befestigt. Der Querbalken 5 ist über das Kuppelteil 8 an dem Rahmen 1 angeordnet. Das Kuppelteil 8 ist mittels der beiden Gelenke 9 an dem Rahmen 1 angelenkt und über den zwischen dem Kuppelteil 8 und dem Rahmen dargestellten, jedoch nicht angeordneten Hydraulikzylinder aus der in Fig. 3 dargestellten Arbeitsstellung in die in Fig. 1 dargestellte Transportstellung und umgekehrt zu verschwenken. An dem Kuppelteil 8 sind seitlich die von den Querbalken 5 gebildeten Seitenausleger gegenüber dem Kuppelteil 7 mittels der Gelenke 10 einschwenkbar angeordnet. Zwischen den Seitenauslegern 5 und dem Kuppelteil 7 sind ebenfalls nicht dargestellte Hydraulikzylinder zum Verschwenken der Seitenausleger 5 aus der Transportstellung in die Arbeitsstellung und umgedreht angeordnet.

Die die Ausbring- und Bodenbearbeitungswerkzeuge tragenden Querbalken 5 sind als Auslegergestänge ausgebildet. Das Auslegergestänge 6 weist das an dem Rahmen 1 angehängte und um die quer zur Fahrtrichtung 11 verlaufende Schwenkachse hochklappbare Kuppelteil 8 auf. An dem Kuppelteil 8 sind jeweils seitlich angelenkte und um senkrechte Achsen, wenn das Kuppelteil 8 mit den Auslegern 5 um 90° aus der Arbeitsstellung in die Transportstellung geschwenkt ist, einklappbaren Seitenausleger 5 angeordnet.

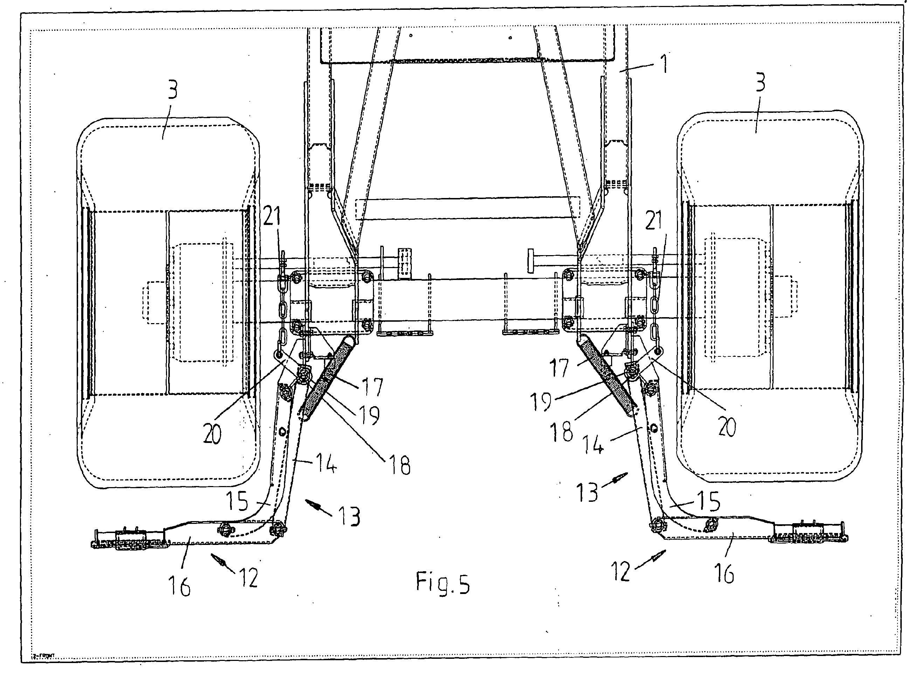

Auf der Rückseite des Rahmens 1 sind jeweils seitlich hinter den Laufrädern 3 in Transportstellung des Gerätes herausschwenkbare Leuchtenträger 12 angeordnet. Die Leuchtenträger 12 weisen jeweils ein Viergelenkgestänge 13 mit den beiden Lenkern 14, 15 und dem sich hinter den Laufrädern 3 befindlichen Leuchtentragarm 16 auf. Zwischen dem Rahmen 1 und einem der Gestängeteile 14 des Viergelenkgestänges 13 ist die den Leuchtenträger 12 einschwenkende Zugfeder 17 angeordnet. Dieses Gestängeteil 14 ist mittels einer Welle 18 in einem Gelenk 19 am Rahmen 1 gelagert. Diese Welle 18 ragt aus dem Gelenk 19 heraus und trägt in dem herausragenden Bereich einen Schwenkhebel 20. Dieser Schwenkhebel 20 ist mit der Welle drehfest verbunden. Das Ende des Schwenkhebels ist mit einem als Kette 21 ausgebildeten Verbindungselement mit dem Kuppelteil 8 verbunden. Ein Gestängeteil 15 des Viergelenkgestänges 13 ist um einen kompakt bauenden Leuchtenträger 12 zu erreichen in Richtung der Laufräder 3 abgebogen, wie beispielsweise Fig. 5 zeigt.

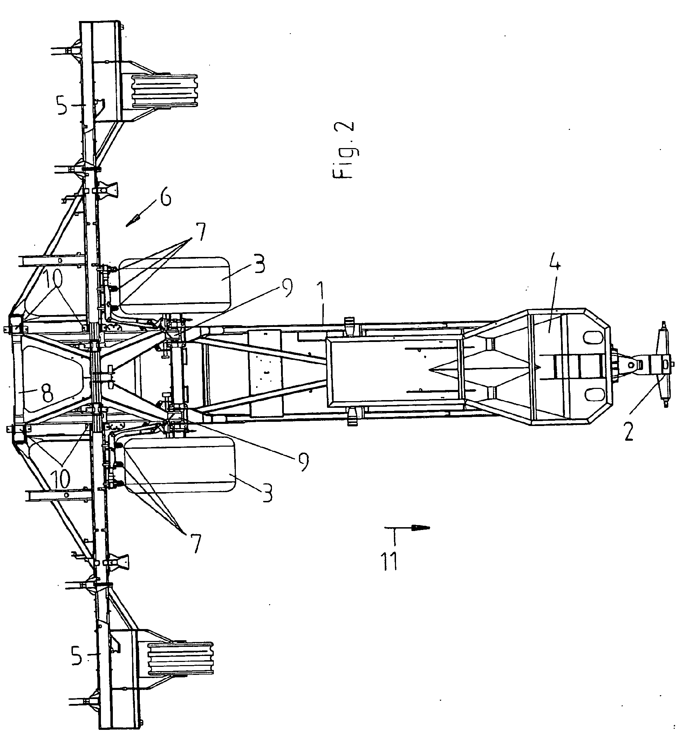

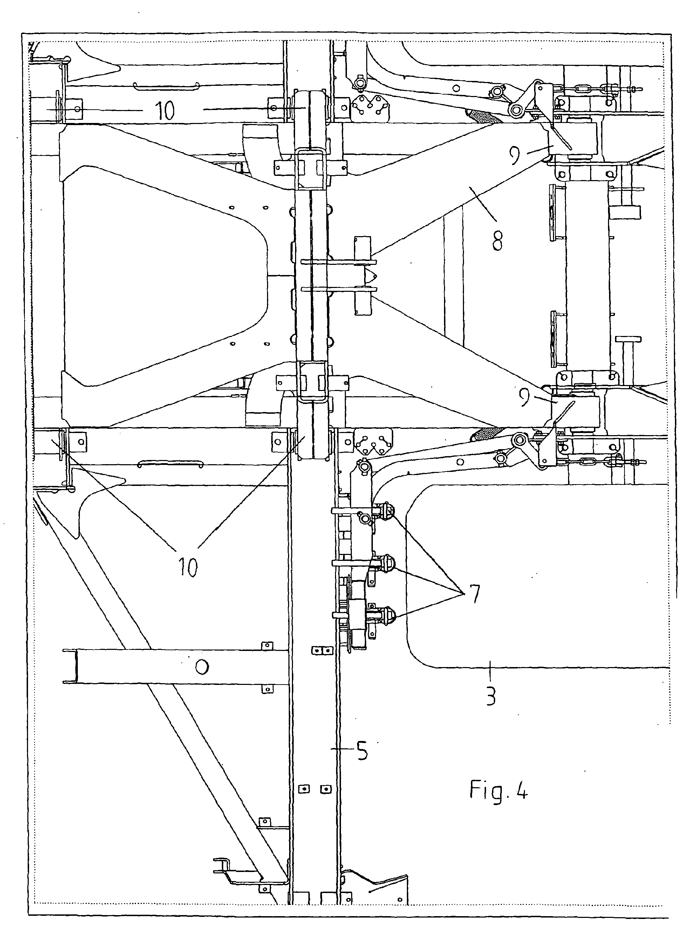

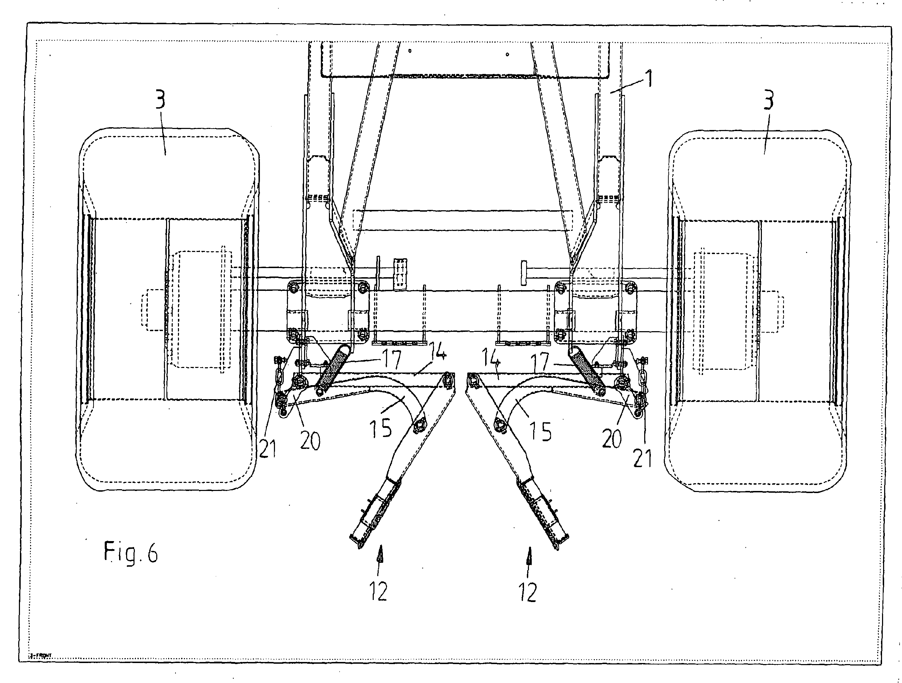

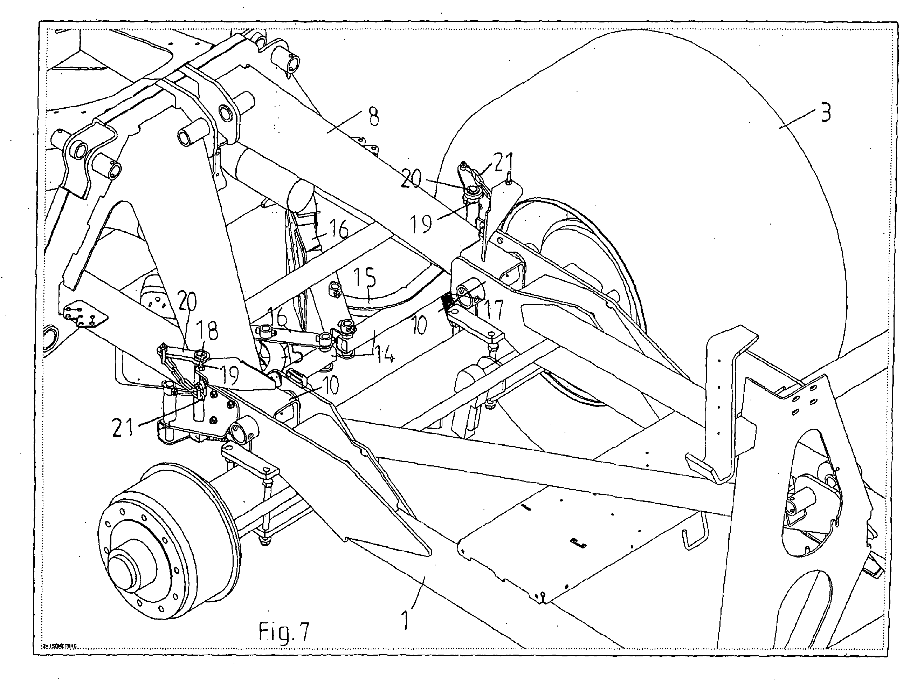

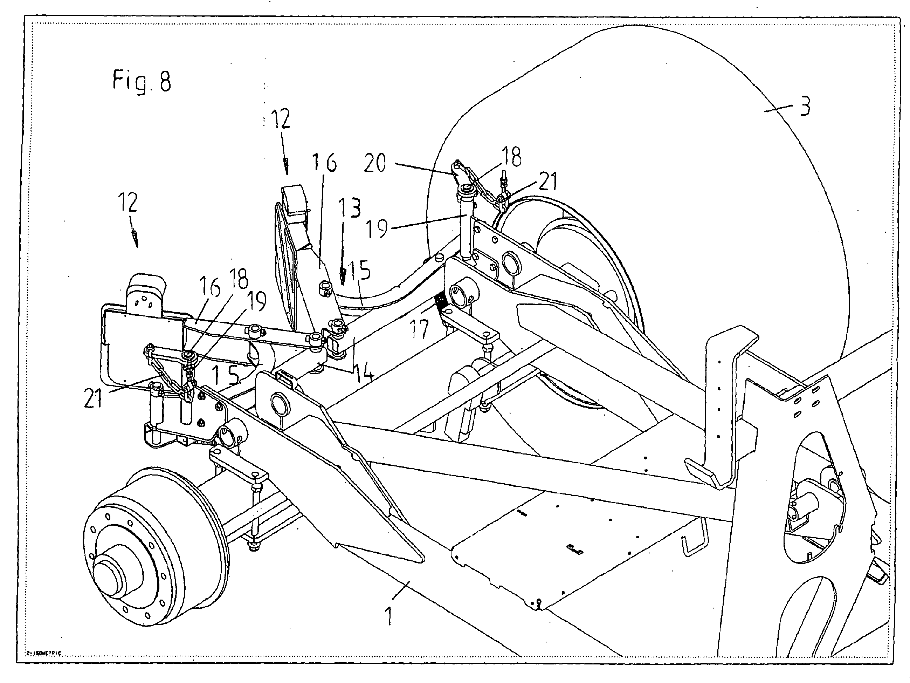

Um eine kompakt und möglichst kurz bauendes Gerät zu erreichen, d.h. dass das Auslegergestänge 6 mit den Querbalken 5 möglichst dicht hinter den Laufrädern 3 angeordnet ist, müssen die Leuchtenträger 12, wenn sich das Auslegergestänge 6 bzw. Querbalken 5 in Arbeitsstellung hinter den Laufrädern 3 befinden, aus diesem Bereich weggebracht werden, weil es sonst zu einer Kollision von Leuchtenträger 12 mit dem Querbalken 5 bzw. den an dem Querbalken 5 auf der Vorderseite angebrachten Arbeitswerkzeugen, im Ausführungsbeispiel die Spurlockerer 7 kommt, wie Fig. 3 und 4 weigen. Hierzu müssen die Leuchtenträger 12 zumindest teilweise in den Bereich zwischen die Laufräder 3 eingeschwenkt werden, wie die Fig. 2, 6, 7 und 8 zeigen. Dieses Einschwenken der Leuchtenträger 2 geschieht automatisch beim Verschwenken des Kuppelteils 8 aus der Transportstellung gemäß Fig. 1 in die in Fig. 2 dargestellte Arbeitsstellung. Durch die Verschwenkbewegung des Kuppelteils 8 aus der Arbeitsstellung in die Arbeitsportstellung um 90° wird gleichzeitig der Schwenkhebel 20 über das Verbindungselement 21 frei gegeben. Hierdurch werden die Lenker 14, 15, 16 des Viergelenkgestänges 23 des Leuchtenträgers 12 aus der in Fig. 5 dargestellten Position in die in Fig. 6 dargestellte Position durch die Kraft der Zugfeder 17 verschwenkt.

Wenn das Auslegergestänge 6 durch das Verschwenken des Kuppelteils 8 aus der Arbeitsstellung gemäß Fig. 2 in die Transportstellung gemäß Fig. 1 verschwenkt wird, zieht das Kupplungsteil 8 über das Verbindungselement 21 an dem Schwenkhebel 20, so dass gegen die Kraft der Zugfeder 17 die Lenker 14, 15, 16 des Viergelenkgestänges 13 des Leuchtenträgers 12 den Leuchtenträger aus der in Fig. 6 dargestellten Transportstellung des Leuchtenträgers 12 in die Fig. 5 dargestellte Transportstellung hinter die Laufräder 3.

## Patentansprüche

1. Gezogenes landwirtschaftliches Gerät mit einem sich auf Laufrädern (3) abstützenden Rahmen (1), an dessen Rückseite hinter den Laufrädern (3) zumindest ein, sich in Arbeitsstellung quer zur Fahrtrichtung (11) erstreckender und in eine Transportstellung verschwenkbarer, Ausbring- und/oder Bodenbearbeitungswerkzeuge tragender, Querbalken (5) mittels eines Kuppelteiles (8) am Rahmen (1) angeordnet ist, **dadurch gekennzeichnet, dass** auf der Rückseite des Rahmens (1) jeweils seitlich hinter die Laufräder (3) herausschwenkbare und in den Bereich zwischen den Laufrädern (3) zumindest teilweise einschwenkbare Leuchtenträger (12) angeordnet sind, dass zwischen den Leuchtenträgern (12) und dem Kuppelteil (8) Mittel (14,17,18,20,21) zum korrespondierenden Ein- und/oder ausschwenken der Leuchtenträger (12) mit der Verschwenkbewegung des Kuppelteiles (8) angeordnet sind.

2. Gerät nach Anspruch 1, **dadurch gekennzeichnet, dass** die Leuchtenträger (12) jeweils mittels Viergelenkgestängen (13,14,15,16) am Rahmen (1) angelenkt sind.

3. Gerät nach einem oder mehreren der vorstehenden Ansprüche, **dadurch gekennzeichnet, dass** zwischen dem Rahmen (1) und einem der Gestängeteile (14) eine die Leuchtenträger (12)einschwenkende Zugfeder (17) angeordnet ist.

4. Gerät nach einem oder mehreren der vorstehenden Ansprüche, **dadurch gekennzeichnet, dass** ein Gestängeteil (14) mit der das Gelenk (19) bildenden Welle (18) drehfest verbunden ist, dass diese Welle (18) nach oben verlängert ist, dass an dem verlängerten Wellenende (18) ein Schwenkhebel (20) angeordnet ist, dass der Schwenkhebel (20) mit einem Verbindungselement (21) mit dem Mittelteil (8) verbunden ist.

5. Gerät nach einem oder mehreren der Ansprüche 2-4, **dadurch gekennzeichnet, dass** ein Gestängeteil (15) des Viergelenkgestänges (13) in Richtung der Laufräder (3) abgebogen ausgebildet ist.

6. Gerät nach Anspruch 1, **dadurch gekennzeichnet, dass** der die Ausbring- und/oder Bodenbearbeitungswerkzeuge tragende Querbalken (5) als einklappbares Auslegergestänge (6) ausgebildet ist, welches aus einem am Rahmen (1) angehängte und um eine quer zur Fahrtrichtung (11) laufende Schwenkachse hochklappbaren Kuppelteil (8) Gestcht wobei und wobei an dem Kuppelteil (8) jeweils seitlich angelenkte und um wenn das Kuppelteil (8) mit den Auslegern (5,6) um 90° aus der Arbeitsstellung in die Transportstellung geschwenkt ist, senkrechte Achsen einklappbare Seitenausleger (6) angeordnet sind.

## Claims

1. Towed agricultural device having a frame (1) which is supported on wheels (3), at least one transverse beam (5) being arranged on the frame (1) at the rear side of said device behind the wheels (3) by means of a coupling part (8), which at least one transverse beam extends transversely with respect to the direction of travel (11) in a working position and can be pivoted into a transport position and bears dispensing and/or soil cultivation tools, **characterized in that** lamp carriers (12) are arranged on the rear side of the frame (1), which lamp carriers can in each case be pivoted out laterally behind the wheels (3) and can be at least partially pivoted into the region between the wheels (3), and **in that** means (14, 17, 18, 20, 21) for pivoting the lamp carriers (12) in and/or out correspondingly to the pivoting movement of the coupling part (8) are arranged between the lamp carriers (12) and the coupling part (8).

2. Device according to Claim 1, **characterized in that** the lamp carriers (12) are in each case articulatedly connected to the frame (1) by means of four-bar linkages (13, 14, 15, 16).

3. Device according to one or more of the preceding claims, **characterized in that** a tension spring (17) which pivots the lamp carriers (12) in is arranged between the frame (1) and one of the linkage parts (14).

4. Device according to one or more of the preceding claims, **characterized in that** one linkage part (14) is connected in a rotationally conjoint manner to the shaft (18) which forms the joint (19), **in that** said shaft (18) is extended upward, **in that** a pivot lever (20) is arranged on the extended shaft end (18), and **in that** the pivot lever (20) is connected to the central part (8) by means of a connecting element (21).

5. Device according to one or more of Claims 2-4, **characterized in that** one linkage part (15) of the four-bar linkage (13) is formed so as to be bent in the direction of the wheels (3).

6. Device according to Claim 1, **characterized in that** the transverse beam (5) which bears the dispensing and/or soil cultivation tools is formed as a jib linkage (6) which can be folded in and which is composed of a coupling part (8) which is suspended on the frame (1) and which can be folded up about a pivot axis running transversely with respect to the direction of travel (11), wherein on the coupling part (8) there are arranged in each case laterally articulatedly connected side jibs (6) which, when the coupling part (8) is pivoted with the jibs (5, 6) through 90° from the working position into the transport position, can be folded in about vertical axes.

## Revendications

1. Dispositif agricole tracté avec un châssis (1) reposant sur des roues de roulement (3), sur le côté arrière duquel, derrière les roues de roulement (3), au moins une poutre transversale (5) s'étendant en position de travail transversalement à la direction de déplacement (11) et pouvant pivoter dans une position de transport, portant des outils de distribution et/ou de travail du sol, est disposée sur le châssis (1) au moyen d'une pièce de couplage (8), **caractérisé en ce que**, sur le côté arrière du châssis (1), chaque fois latéralement derrière les roues de roulement (3), sont disposés des blocs lumineux (12) déployables et au moins partiellement rabattables dans la région située entre les roues de roulement (3), **en ce que** des moyens (14, 17, 18, 20, 21) pour le déploiement et/ou le rabattement correspondant des blocs lumineux (12) avec le mouvement de pivotement de la pièce de couplage (8) sont disposés entre les blocs lumineux (12) et la pièce de couplage (8).

2. Dispositif selon la revendication 1, **caractérisé en ce que** les blocs lumineux (12) sont respectivement articulés sur le châssis (1) au moyen de quadrilatères articulés (13, 14, 15, 16).

3. Dispositif selon une ou plusieurs des revendications précédentes, **caractérisé en ce qu'**un ressort de traction (17) rabattant les blocs lumineux (12) est disposé entre le châssis (1) et une des barres (14) du quadrilatère.

4. Dispositif selon une ou plusieurs des revendications précédentes, **caractérisé en ce qu'**une barre (14) est reliée de façon calée en rotation à l'arbre (18) formant l'articulation (19), **en ce que** cet arbre (18) est prolongé vers le haut, **en ce qu'**un levier pivotant (20) est disposé sur l'extrémité prolongée de l'arbre (18), **en ce que** le levier pivotant (20) est relié à la pièce centrale (8) avec un élément de liaison (21).

5. Dispositif selon une ou plusieurs des revendications 2 à 4, **caractérisé en ce qu'**une barre (15) du quadrilatère articulé (13) est réalisée sous forme coudée en direction des roues de roulement (3).

6. Dispositif selon la revendication 1, **caractérisé en ce que** la poutre transversale (5) portant des outils de distribution et/ou de travail du sol est réalisée sous la forme d'une barre de bras rabattable (6), qui se compose d'une pièce de couplage (8) suspendue au châssis (1) et relevable autour d'un axe de pivotement s'étendant transversalement à la direction de déplacement (11) et dans lequel des bras latéraux (6), respectivement articulés latéralement et rabattables autour d'axes verticaux lorsque la pièce de couplage (8) avec les bras (5, 6) a pivoté de 90° de la position de travail à la position de transport, sont disposés sur la pièce de couplage (8).
